Europäisches Patentamt

European Patent Office

Office européen des brevets

(11) Publication number: **0 412 062 A1**

# EUROPEAN PATENT APPLICATION

(21) Application number: **90830353.0**

(22) Date of filing: **31.07.90**

(51) Int. Cl.5: **B60G 7/02**, B60G 3/14

(30) Priority: **04.08.89 IT 6768689**

(43) Date of publication of application:
**06.02.91 Bulletin 91/06**

(84) Designated Contracting States:
**DE ES FR GB SE**

(71) Applicant: **FIAT AUTO S.p.A.**
**Corso Giovanni Agnelli 200**
**I-10135 Torino(IT)**

(72) Inventor: **Elia, Luigi**
**Via Morra, 24**
**I-10029 Villastellone (Torino)(IT)**

(74) Representative: **Notaro, Giancarlo et al**
**c/o Jacobacci-Casetta & Perani S.p.A. Via**
**Alfieri, 17 17**
**I-10121 Torino(IT)**

(54) **A rear suspension unit for motor vehicles.**

(57) A suspension unit for motor vehicles, of the type in which the various suspension members are mounted on an auxiliary frame (2) fixed in turn to the motor-vehicle body, and in which the auxiliary frame (2) comprises two sheet-metal box supports (3) fixed to the the two sides of the body and a tubular sheet-metal cross member (6) connected rigidly at its ends to the two lateral supports (3). The suspension unit includes two arms (7) which are articulated to the auxiliary frame (2) at their front ends and carry the rear wheels of the motor vehicle at their rear ends. The two arms are articulated by means of rigid bearings, that is, bearings without deformable rubber elements. The articulation axes (10) are inclined to a line perpendicular to the longitudinal median plane of the motor vehicle and converge rearwardly at a point (P) in that plane.

## A REAR SUSPENSION UNIT FOR MOTOR VEHICLES

The present invention relates to a rear suspension unit for motor vehicles, of the type including an auxiliary frame which carries the various suspension members and can be fixed to the body of the motor vehicle, in which the auxiliary frame comprises two sheet-metal box supports with attachments for fixing to the two sides of the body and a tubular sheet-metal cross member connected rigidly at its ends to the two lateral supports, and in which the suspension unit includes two longitudinal arms which are articulated to the auxiliary frame at their front ends and carry the rear wheels of the motor vehicle at their rear ends. A suspension unit of the type indicated above is described and illustrated, for example, in the same Applicant's Italian patent application No. 67584-A/87 and in the corresponding European patent application EP-A-0 298 929.

The object of the present invention is to provide an improved suspension unit which has particular rolling stability, ensures the comfort of the passengers and at the same time ensures that the vehicle has good handling characteristics when it is driven.

In order to achieve this object, the present invention provides a suspension unit of the type indicated above, characterised in that the articulation axes of the two longitudinal arms are inclined to a line perpendicular to the longitudinal median plane of the motor vehicle and converge rearwardly at a point in that plane. Preferably, the arms are articulated by means of rigid bearings, that is, bearings without deformable rubber elements, for example, rolling bearings.

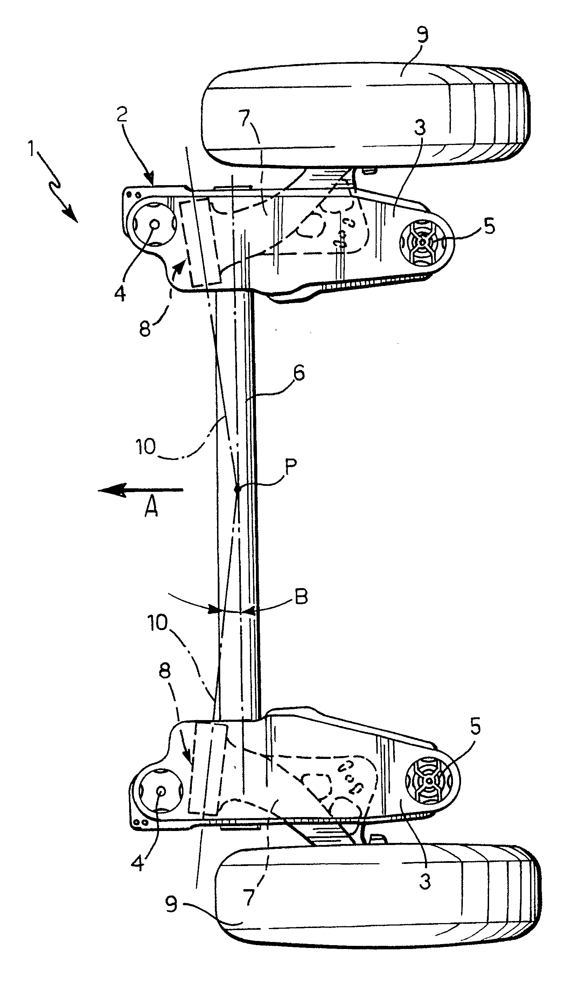

Further characteristics and advantages of the invention will become clear from the description which follows with reference to the appended drawing, provided purely by way of non-limiting example, which shows a schematic plan view of a rear suspension unit according to the invention.

In the drawing, a rear suspension unit for motor vehicles is generally indicated 1 and includes an auxiliary frame 2 which carries all the suspension members and is in turn fixed to the body of the motor vehicle. The auxiliary frame 2 includes two box members 3 which extend longitudinally of the vehicle (the direction of advance is indicated by the arrow A) and have attachment points 4, 5 for connection to the floor of the vehicle body from below. The structure of the auxiliary frame 2 is completed by a tubular cross-member 6 fixed at its ends to the box members 3.

The structural details of the box members 3 and the auxiliary cross member 6 are not described in the present application, since these members are of known type (see, for example, the same Applicant's prior patent application No. 67584-A/87) and do not fall within the scope of the invention. Moreover, the elimination of these details from the drawing makes the latter more readily and easily understood.

The suspension unit includes two arms 7 the front end of each of which incorporates a bush 8 which is articulated to the respective box member 3; the rear end of the arm carries the respective rear wheel 9 of the motor vehicle.

Each bush 8 is mounted rotatably on a pin carried by the respective box structure 3 with the interposition of a rigid bearing, that is, a bearing which does not include deformable rubber elements, for example, a rolling bearing. The particular type of bearing is not shown in detail in the drawings because it may be selected by the design engineer according to the usual design criteria and because the specific type of bearing does not fall within the scope of the present invention. Once again, the elimination of these structural details from the drawing makes the latter more easily understood.

The two articulation axes of the bushes 8 are indicated 10. These axes lie in a horizontal plane and are inclined at an angle B to a line perpendicular to the longitudinal median plane of the vehicle. The angle B selected is between a minimum of 2 degrees and a maximum of 20 degrees, depending on design requirements.

The two articulation axes 10 converge rearwardly at a point P in the longitudinal median plane of the vehicle.

The use of two longitudinal arms whose articulation axes are inclined in the manner indicated above provides the vehicle with improved rolling stability such that the stabiliser member (for example, a torsion bar) with which the rear suspension is usually provided can be made smaller, or even eliminated, with a consequent improvement in the travelling comfort of the passengers in that the elimination or reduction of the anti-roll stabilising member permits greater independence between the two rear wheels. Obviously, there is also a consequent reduction in the cost of the suspension unit. A further advantage lies in the fact that the vehicle has better handling when it is driven because the outer rear wheel is subject to smaller variations in its angle of camber on bends than is the case when the articulation axis of the longitudinal arm is perpendicular to the longitudinal median plane of the vehicle (B = 0).

Naturally, the usual resilient means and shock-absorbers (not shown) are associated with the two longitudinal arms.

Naturally, the principle of the invention remaining the same, the details of construction and forms of embodiment may be varied widely with respect to those described and illustrated purely by way of example, without thereby departing from the scope of the present invention.

## Claims

1. A rear suspension unit for motor vehicles, including an auxiliary frame (2) which carries the various suspension members and can be fixed to the body of the motor vehicle, in which the auxiliary frame comprises two sheet-metal box supports (3) with attachments (4, 5) for fixing to the two sides of the body and a tubular sheet-metal cross member (6) connected rigidly at its ends to the two lateral supports (3), and in which the suspension unit includes two longitudinal arms (7) which are articulated to the auxiliary frame (2) at their front ends and carry the rear wheels of the motor vehicle at their rear ends,
characterised in that the articulation axes (10) of the two longitudinal arms (7) are inclined to a line perpendicular to the longitudinal median plane of the motor vehicle and converge rearwardly at a point (P) in that plane.
2. A rear suspension unit according to Claim 1, characterised in that the two articulation axes (10) lie in a horizontal plane and are inclined to a line perpendicular to the longitudinal median plane of the motor vehicle at an angle (B) of between 2 degrees and 20 degrees.
3. A rear suspension unit according to Claim 1, characterised in that the arms (7) are articulated to the respective box supports (3) with the interposition of rigid bearings, that is, bearings which do not include deformable rubber elements.

EP 0 412 062 A1

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | FR-A-1431287 (FORD) <br> * figures 1, 2 * <br> --- | 1-3 | B60G7/02 <br> B60G3/14 |
| Y | FR-A-2392840 (PEUGEOT-CITROEN) <br> * figures 1-5 * <br> --- | 1-3 | |
| A,D | EP-A-298929 (FIAT) <br> * abstract; figures 1-4 * <br> --- | 1, 3 | |
| A | DE-A-1930802 (PORSCHE) <br> * figures 1-3 * <br> --- | 1, 2 | |
| A | DE-A-1630505 (FORD) <br> * figures 5, 6 * <br> ----- | 1 | |

TECHNICAL FIELDS
SEARCHED (Int. Cl.5 )

B60G

The present search report has been drawn up for all claims

| Place of search | Date of completion of the search | Examiner |
|---|---|---|
| THE HAGUE | 15 OCTOBER 1990 | TORSIUS A. |